# FASCICULE DE BREVET EUROPEEN

(11) **EP 2 012 915 B1**
(45) Date de publication et mention de la délivrance du brevet: **23.06.2010**
(21) Numéro de dépôt: 07731305.4
(22) Date de dépôt: 17.04.2007
(51) Int. Cl.: B01J 8/22, C10G 2/00, F28D 7/00

(54) **NOUVEL ECHANGEUR INTERNE POUR REACTEUR GAZ LIQUIDE SOLIDE DESTINE A LA SYNTHESE FISCHER TROPSCH**
NEUER INTERNER AUSTAUSCHER FÜR GAS-FLÜSSIGKEIT-FESTSTOFF-REAKTOR FÜR DIE FISCHER-TROPSCH-SYNTHESE
NEW INTERNAL EXCHANGER FOR A GAS-LIQUID-SOLID REACTOR INTENDED FOR THE FISCHER TROPSCH SYNTHESIS

(30) Priorité: 21.04.2006 FR 0603691
(43) Date de publication de la demande: 14.01.2009
(73) Titulaire: IFP, 92852 Rueil-Malmaison Cédex (FR); ENI S.p.A., Rome (IT)
(72) Inventeur: VIGUIE, Jean-Christophe, 69360 Saint Symphorien D'Ozon (FR); SCHWEITZER, Jean-Marc, 38200 Villette de Vienne (FR); HUGUES, François, 69390 Vernaison (FR); MUNIER, Michel, 77820 Le Châtelet en Brie (FR); CHRETIEN, Dominique, 75012 Paris (FR); SZYMKOWIAK, Bertrand, 69005 Lyon (FR); CAPRANI, Eric, 75012 Paris (FR); DOUZIECH, Damien, 92500 Rueil Malmaison (FR)
(86) Numéro de dépôt international: PCT/FR2007/000640
(87) Numéro de publication internationale: WO 2007/122315

(56) Documents cités:
- EP-A1- 0 038 098
- WO-A-2004/101475
- WO-A-2005/075065
- US-A- 4 060 127
- US-A1- 2005 080 147

## Description

### DOMAINE DE L'INVENTION

L'invention concerne un nouveau type d'échangeur interne pour équiper un réacteur industriel permettant d'effectuer la réaction de synthèse Fischer-Tropsch.
Ce type de réacteur, généralement de grande taille, met en oeuvre une réaction chimique fortement exothermique et nécessite donc un dispositif d'échange permettant d'éliminer les calories du milieu réactionnel. Le milieu réactionnel est essentiellement constitué d'une phase liquide traversée par des bulles de gaz, ladite phase liquide contenant en suspension de fines particules solides de catalyseur. Ce milieu est généralement appelé "slurry" par l'homme du métier.
Le faisceau d'échange, objet de la présente invention, permet des opérations de manutention simplifiées et des phases d'inspection et de maintenance optimisées. Plus particulièrement, le faisceau d'échange objet de l'invention, est conçu de façon modulaire et permet l'extraction d'une partie quelconque du faisceau, par exemple en cas de réparation, sans avoir à démonter l'intégralité de celui-ci.
La surface d'échange apportée par le faisceau d'échange se trouve répartie de façon homogène dans l'ensemble du volume du réacteur afin d'assurer un parfait contrôle de la température, et cette répartition est maintenue homogène ou la plus homogène possible, même lorsqu'une partie du faisceau est isolée.

### EXAMEN DE L'ART ANTERIEUR

Les réacteurs pour la synthèse Fischer-Tropsch sont généralement équipés d'un échangeur interne ou externe au réacteur de manière à évacuer les calories générées par la réaction chimique. Généralement cet échangeur permet de générer de la vapeur d'eau à moyenne pression à partir d'une alimentation en eau. D'autres fluides peuvent toutefois être utilisés sans restreindre le champ de l'invention.
Compte tenu de l'importance de la surface d'échange à installer, le faisceau est généralement complexe, et il est souvent divisé en modules afin de permettre une manutention aisée.
Un tel type de faisceau est par exemple décrit dans le brevet US 2005/0080147 qui décrit une configuration modulaire avec un mode d'alimentation traditionnel faisant appel à un distributeur à deux étages en râteau.
Un réacteur industriel pour la synthèse Fischer-Tropsch a généralement des dimensions très importantes, typiquement 40 mètres de hauteur pour un diamètre de 10 mètres.
La surface d'échange à installer pour évacuer les calories est de l'ordre de 4 à 30 m²/m³ de milieu réactionnel, préférentiellement de 4 à 20 m²/m³ et de manière encore préférée de 4 à 15 m²/m³.
Le volume du milieu réactionnel est défini comme le volume du réacteur diminué du volume occupé par le faisceau d'échange. Les bulles présentes dans le milieu réactionnel peuvent générer des vibrations sur le faisceau d'échange, et la présente invention prévoit par conséquent le maintien des différentes parties constitutives de l'échangeur au moyen de raidisseurs installés à des emplacements appropriés.
On entend par raidisseurs tout support permettant de lier des parties du faisceau, soit au niveau d'une épingle, soit entre épingles, soit entre modules.

### DESCRIPTION SOMMAIRE DES FIGURES

La figure 1 est une vue d'ensemble du réacteur pour la synthèse Fischer-Tropsch permettant de visualiser la disposition générale du faisceau d'échange réparti en plusieurs étages notés 1, 2, 3, 4 en allant conventionnellement de bas en haut.
Les tubulures notées F1 et F2 rentrant dans la partie inférieure du réacteur correspondent aux entrées des réactifs.

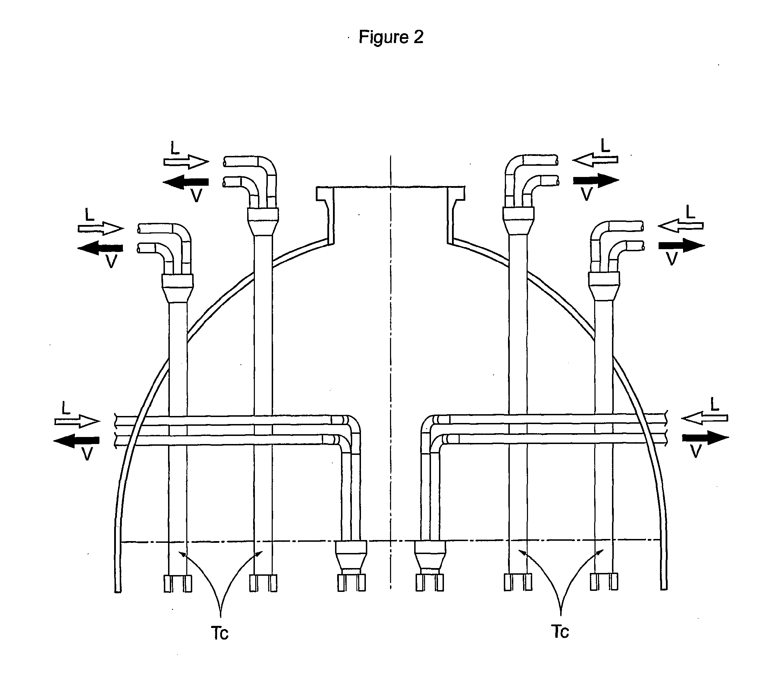

La figure 2 est une vue de la partie supérieure du réacteur permettant de visualiser les extrémités des tubes centraux (Tc) servant à l'alimentation du faisceau en fluide de refroidissement (noté L) et à l'extraction du fluide partiellement vaporisé (noté V).

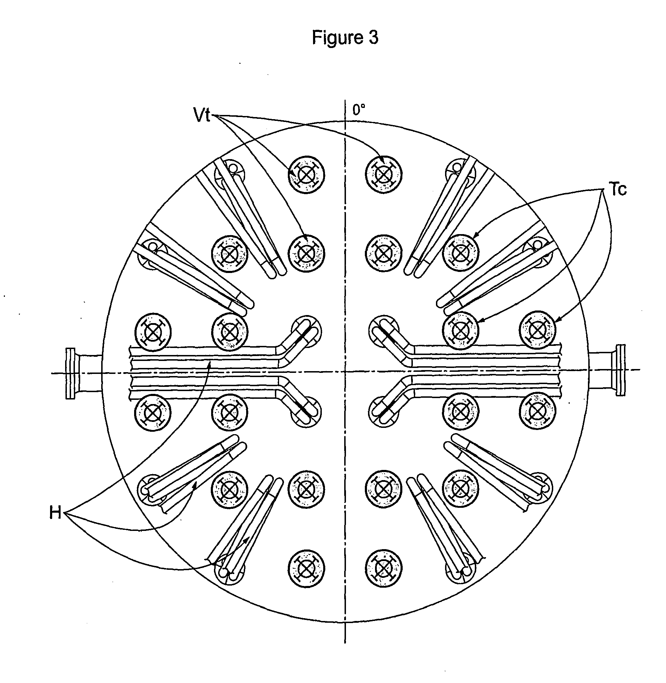

La figure 3 est une vue de dessus du faisceau selon l'invention permettant de visualiser la position des modules et des tubes centraux (Tc). Certains modules ont une tubulure d'entrée sortie qui se fait à la verticale (notée Vt), d'autres modules ont une tubulure d'entrée sortie qui se fait à l'horizontal (notée H). La majorité, et préférentiellement l'ensemble des tubulures d'entrée sortie, pénètrent ou quittent le réacteur au niveau de son dôme supérieur, comme cela est représenté sur la figure 1.
La figure 4 est une vue de la partie supérieure d'un module en perspective permettant de visualiser les épingles constituant un module et entourant le tube central, ainsi que la division du tube central en deux circuits indépendants (L1/V1, L2/V2). La figure 4 permet également de visualiser les feuilles primaires (Fp) et les feuilles secondaires (Fs) permettant d'augmenter l'inertie du tube central (Tc), ainsi que certains éléments raidisseurs (Rg).
La figure 5 est une vue de dessus d'un module permettant d'expliciter l'alimentation des épingles selon le premier circuit (fig 5a) et selon le second circuit (Fig 5b) à deux étages successifs notés N et N+1.
Les notions de premier et second circuit seront précisées dans la description détaillée. Sur cette figure 5, on a noté les épingles E1, E2, E3 et E4 dans le sens des aiguilles d'une montre.
La figure 6 est une vue d'ensemble d'un module constituant le faisceau qui permet de situer la position des différents éléments raidisseurs dudit module (noté Rg), et précise les dimensions L (hauteur d'un module) et W (largeur d'un module).
La figure 7 est une vue de l'espace inter étages permettant de montrer un système de raidisseurs (Ag) entre tubes centraux.
La figure 8 est une représentation schématique des épingles d'un faisceau sur 2 étages successifs notés N et N+1, permettant de comprendre le mode d'alimentation dit "alternée".

### DESCRIPTION SOMMAIRE DE L'INVENTION

La présente invention concerne un faisceau d'échange de chaleur de conception modulaire, contenu à l'intérieur d'un réacteur destiné à effectuer la réaction de synthèse Fischer Tropsch.
Le réacteur Fischer-Tropsch est généralement constitué d'une enveloppe cylindrique fermée à sa partie supérieure par un dôme supérieur, et à sa partie inférieure par un dôme inférieur équipé de moyens d'introduction des fluides réactionnels, le dôme supérieur possédant des moyens d'introduction d'un fluide de refroidissement et des moyens d'évacuation dudit fluide de refroidissement partiellement vaporisé.
L'échangeur interne équipant le réacteur Fischer-Tropsch est constitué par un faisceau d'échange immergé au sein du milieu réactionnel gaz liquide solide, de type °slurry".
Ledit faisceau d'échange est constitué de modules généralement identiques, uniformément répartis dans une section du réacteur formant un étage de modules.
Le faisceau comporte généralement au moins deux étages de modules identiques, chaque module comprenant un ensemble d'épingles identiques réparties autour du tube central commun au module considéré et à l'ensemble des modules verticalement alignés avec le module considéré sur les différents étages du faisceau.

Ledit tube central comprend des séparations permettant à la fois l'alimentation en fluide de refroidissement des épingles du module et la collecte du fluide partiellement vaporisé de ces mêmes épingles.

L'alimentation des épingles d'un module donné, à partir du tube central peut être réalisée de différentes manières, et sera préférentiellement alternée au sein dudit module, au sens qui sera donné précisément à cette expression dans la description détaillée qui suit.
Le faisceau objet de la présente invention est généralement constitué d'un ensemble de modules identiques, dit modules standards, à l'exception d'un nombre limité de modules attenants à la paroi du réacteur, ces modules standards étant d'une part uniformément répartis dans une section du réacteur formant un étage de modules, et d'autre part verticalement regroupés autour d'un tube central, formant ainsi un groupe vertical de modules répartis sur les différents étages.

L'intégralité du faisceau peut donc être généralement obtenue par la multiplication des groupes verticaux de modules, chaque groupe vertical de modules étant regroupé autour d'un même tube central. Cette disposition en groupes verticaux de modules trouve en particulier son intérêt lors des interventions nécessitant l'extraction d'une ou plusieurs épingles d'un module, et ce quelque soit l'étage concerné même l'étage inférieur du réacteur.

Une procédure préférée d'accès à ladite épingle ou audit module est décrite et fait également partie de la présente invention.
L'invention concerne donc également un procédé d'extraction d'une épingle d'un réacteur pour la synthèse Fischer-Tropsch comprenant un faisceau d'échange selon l'invention.

### DESCRIPTION DETAILLEE DE L'INVENTION

Le faisceau d'échange objet de la présente invention a une conception modulaire, c'est à dire qu'il est constitué de modules majoritairement identiques, à l'exception des modules attenants à la paroi qui peuvent être d'un type différent.
Chaque module comprend un nombre d'épingles identiques entourant un tube central, ledit tube central servant à l'alimentation en fluide de refroidissement des épingles du module et à la collecte du fluide partiellement vaporisé issu de ces mêmes épingles. Les tubes centraux sont notés Tc sur les différentes figures où ils apparaissent.
Les épingles de chaque module sont réparties régulièrement autour du tube central servant à leur alimentation. Chaque épingle est constituée d'un conduit préférentiellement cylindrique s'étendant verticalement et effectuant un certain nombre d'allers et retours verticaux, chaque aller étant relié à chaque retour par une portion en U. Un ensemble aller et retour est généralement désigné par l'homme du métier sous le terme de passe.

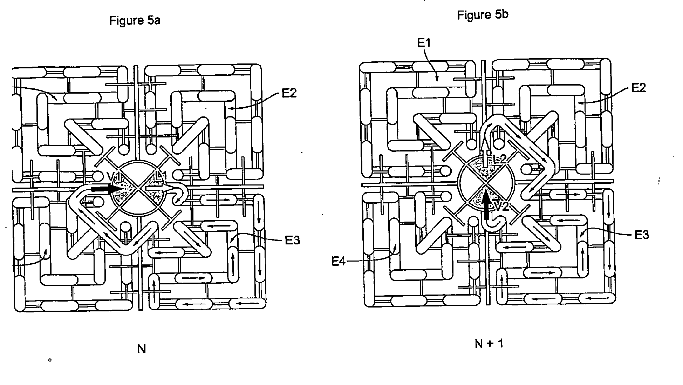

Sur les figures 5a et 5b on a une vision de la configuration des 4 épingles entourant le tube central. Chaque épingle se déploie sous forme d'allers et retours verticaux de façon à occuper de façon régulière un espace autour du tube central qui correspond dans ce cas à un cadran. On distingue donc sur les figures 5a et 5b 4 cadrans, correspondant aux épingles notées E1, E2, E3 et E4 repérées conventionnellement dans le sens des aiguilles d'une montre.
L'alimentation d'une épingle donnée en fluide de refroidissement s'effectue par un secteur du tube central, et le fluide de refroidissement partiellement vaporisé est collecté dans un autre secteur du tube central distinct du secteur d'alimentation.
L'ensemble des modules d'un étage donné couvre généralement la section du réacteur et forme un étage de modules. Généralement, le nombre de modules par étage est compris entre 5 et 80, de préférence entre 40 et 70, et de manière encore préférée, compris entre 45 et 65.

Pour un réacteur donné, le nombre de modules par étage dépend de la taille du module.
De préférence, le nombre d'épingles par module est pair et égale à 2, 4, 6 ou 8.
Ces épingles peuvent par exemple présenter une section externe globale de forme carré, et ainsi former un module ayant une section globale ayant la forme d'un quadrilatère lorsqu'elles sont au nombre de 4.

Elles peuvent aussi présenter une section globale externe de forme triangulaire et former un module ayant une section globale externe ayant la forme d'un hexagone lorsqu'elles sont au nombre de 6, ou d'un octogone lorsqu'elles sont au nombre de 8.
Dans le cas particulier d'un module constitué de 4 épingles, le nombre de module par étage sera compris entre 0,4 et 0,7 modules par mètre carré de section de réacteur, et préférentiellement comprise entre 0,45 et 0,65 modules par mètre carré de section de réacteur.
Les modules sont répartis en différents étages, généralement de 2 à 10, de préférence de 2 à 6, et de manière encore préférée de 2 à 4 étages, voire en 4 étages qui permettent de couvrir toute la hauteur du réacteur.
Les étages sont séparés par un espace vide de hauteur comprise entre 0,8 mètre et 1,5 mètre.
Cet espace permet une inspection de l'ensemble des points de soudures des modules.
Pendant un arrêt de maintenance, un homme peut accéder à l'espace inter étages, inspecter les soudures, et réaliser les petites opérations de maintenance in situ sans démontage.
Le tube central d'un module appartenant à un étage N se prolonge à l'étage suivant N+1, de sorte que le tube central est commun à l'ensemble des modules situés aux différents étages le long de la même verticale. On appelle cet ensemble de modules verticalement alignés un groupe vertical de modules.

Dans le cas d'un réacteur cylindrique de diamètre constant, chaque étage du faisceau est donc de préférence constitué d'un nombre de modules identiques, dit module standard, à l'exception de certains modules attenants à la paroi du réacteur qui comportent moins d'épingles que les modules standards. Il est toutefois possible d'utiliser des modules différents dans le cas où des internes particuliers sont incorporés dans un réacteur cylindrique, ou dans le cas où ledit réacteur présente des variation de son diamètre ou de sa forme le long de sa hauteur.
De préférence, les modules standards de chaque étage fonctionnent alors en parallèle et présentent un nombre d'épingles identiques.
Les modules non standards sont généralement situés le long des parois du réacteur. En raison de la forme cylindrique de ces parois, un module non standard comportera moins d'épingle qu'un module standard. Par exemple, pour des modules standards comportant 4 épingles, un module non standard pourra comporter 3, 2 voire 1 épingle. Le principe de l'alimentation de chaque épingle au moyen d'un tube central commun aux différentes épingles d'un module non standard reste valable. Il n'y a pas de différence substantielle entre une épingle faisant partie d'un module standard et une épingle faisant partie d'un module non standard.

Les modules non standards représentent généralement moins de 35 %, et le plus souvent moins de 30% de l'ensemble des modules. Leur conception générale est du même type que celle des modules standards, avec seulement un nombre réduit d'épingles par module. Ils peuvent ne pas respecter le principe de l'alimentation alternée qui est préférée pour les modules standards.

L'alimentation par le tube central des épingles d'un module et des modules verticalement alignés avec le module considéré, est préférentiellement alternée entre deux épingles adjacentes, soit à l'intérieur d'un même module, soit entre deux étages consécutifs.
Ce tube central assure le support mécanique des modules ainsi que l'alimentation des épingles en fluide de refroidissement et la collecte dudit fluide partiellement vaporisés en sortie des épingles. Il a donc une double fonctionnalité mécanique et hydraulique.

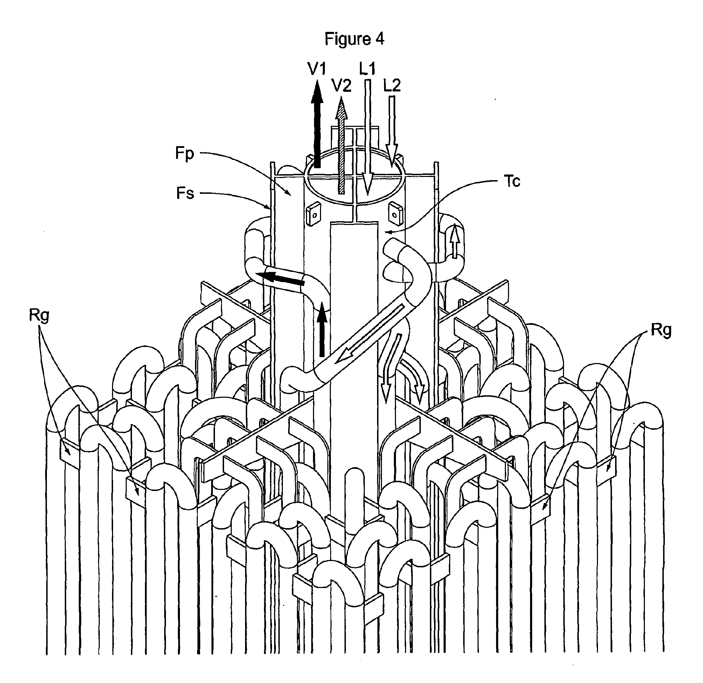

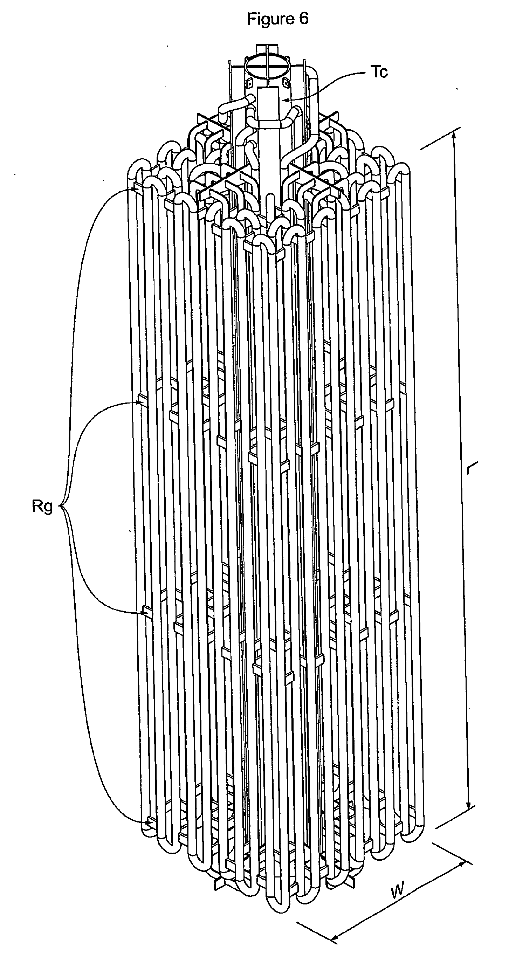

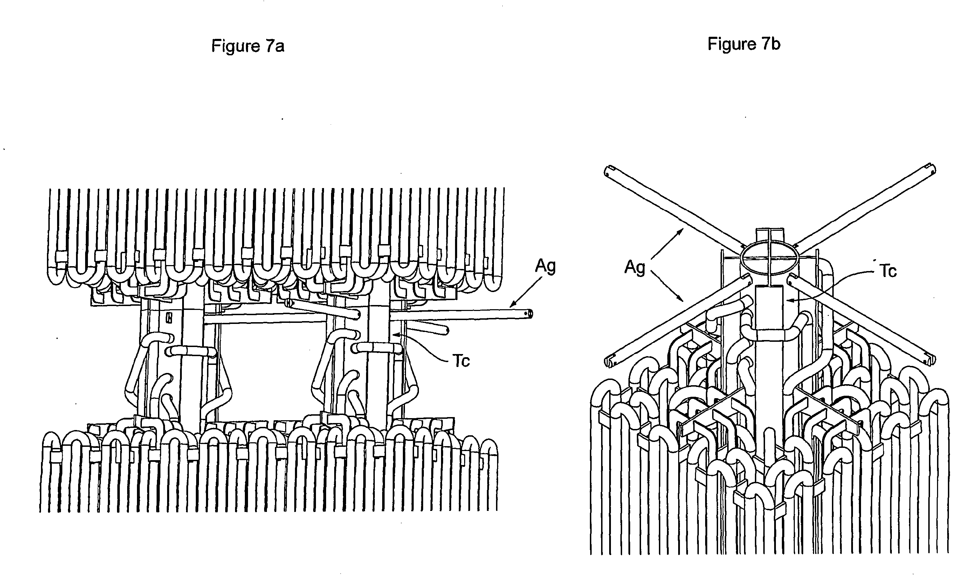

Du point de vue mécanique, le tube central est de préférence rigidifié par un cloisonnement intérieur permettant la définition des différents circuits d'alimentation. Son inertie est également de préférence augmentée par des feuilles primaires (Fp) prolongeant à l'extérieur les cloisons intérieures, et s'étendant sur toute la longueur dudit tube, comme cela peut être vu sur la figure 4 . Ces feuilles primaires ( Fp) sont constituées de feuilles perpendiculaires à la paroi cylindrique du tube central (Tc) et soudées le long de ladite paroi.
Les feuilles primaires (Fp) attenantes à un tube central (Tc) peuvent être éventuellement prolongées d'autres éléments verticaux ou feuilles secondaires (Fs), tels que ceux représentés sur la figure 4, de manière à former avec la feuille primaire (Fp) une forme de T.
L'ensemble formé par les feuilles primaires (Fp) et les feuilles secondaires (Fs) permet d'augmenter l'inertie du tube central, et donc de limiter l'amplitude des vibrations qu'il peut éventuellement subir du fait du milieu réactionnel dans lequel il est immergé.
La construction du tube central cloisonné et des feuilles primaires est généralement réalisé à partir de 4 feuilles disposées de manière perpendiculaire sur lesquelles on vient souder sur toute la longueur un quart de cylindre positionné entre deux feuilles consécutives.
Les 4 quarts de cylindres correctement positionnés dans l'alignement l'un de l'autre forment le tube central. La partie des 4 feuilles intérieure au tube central forme les cloisons intérieures du tube central, et la partie des 4 feuilles extérieure au tube central forme les feuilles primaires. Les épingles constituant un module peuvent être liées entre elles au moyen d'éléments raidisseurs (Rg), tels que ceux montrés sur la figure 6.
De la même manière, des éléments raidisseurs (Ag) peuvent lier entre eux deux tubes centraux au niveau de l'espace entre étage comme cela est montré sur la figure 7.
Tout autre système de rigidification au moyen d'éléments liant entre eux les différentes parties d'un module est compatible avec la présente invention.
De préférence, la plupart de ces tubes centraux sont fixés sur le dôme supérieur du réacteur, tandis qu'ils coulissent généralement dans une gaine en pied de réacteur visant à guider les déplacements relatifs entre tubes centraux et réacteurs liés aux phénomènes de dilatation thermique.
De préférence, d'autres tubes centraux sont soudés sur le dôme inférieur du réacteur, les effets de dilatation thermique étant dans ce cas gérés par la mise en place de lyre de dilatation, dûment dimensionnées et positionnées en tête des tubes centraux.

La description qui suit d'un mode particulier de réalisation de l'invention est donnée pour un module standard comprenant 4 épingles, et pour une configuration du réacteur à 4 étages.
Le tube central d'un module donné est connecté aux épingles dudit module par des moyens de communication qui permettent d'introduire le fluide d'alimentation à l'intérieur de chacune des épingles, et de récupérer le fluide partiellement vaporisé issu de ces mêmes épingles.

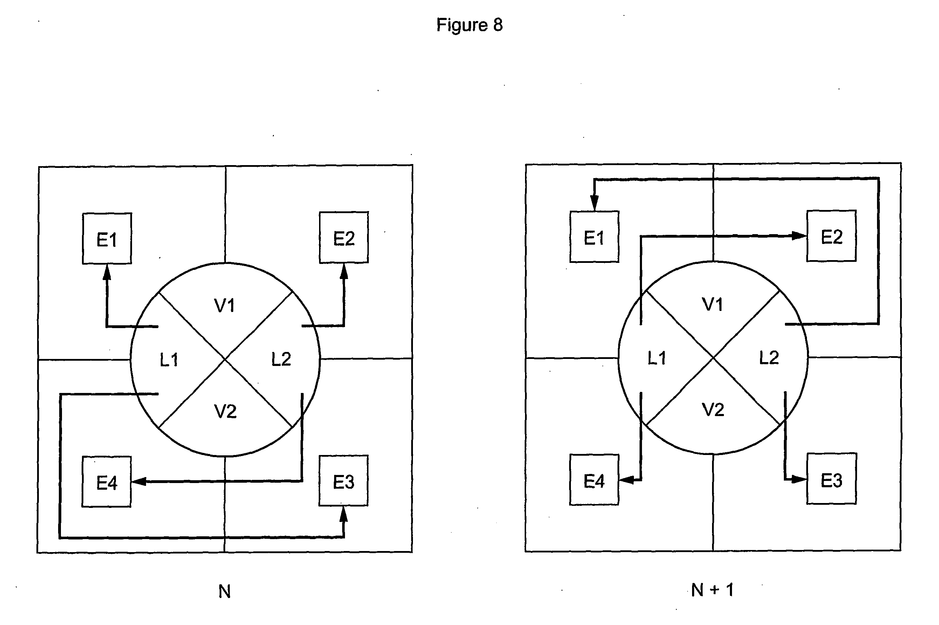

Sur la figure 8, on a représenté schématiquement un tube central s'étendant sur 2 étages consécutifs notés N et N+1, chaque module comportant 4 épingles repérées E1, E2, E3 et E4 dans le sens des aiguilles d'une montre.
Le tube central est généralement divisé en 2 circuits indépendants au moyen soit d'un croisillon interne, soit de tout autre dispositif de division permettant de réaliser au moins deux circuits indépendants. Par exemple, il peut s'agir d'un tube coaxial au tube central situé à l'intérieur dudit tube central et divisé en deux par une cloison verticale, la partie annulaire comprise entre le tube central et le tube intérieur étant elle même divisée en deux par deux cloisons verticales. Un tel dispositif détermine également deux circuits indépendants, un premier circuit par le tube intérieur, et un second circuit par la zone annulaire comprise entre le tube interne et le tube central.

L' invention n'est pas limitée par les moyens de division du tube central en différents secteurs permettant de définir des circuits indépendants.
La présente invention est compatible avec un nombre de circuits indépendants supérieur à 2 dans la mesure où il est toujours possible de définir un plan d'alimentation "alternée" des épingles, au sens qui sera donné à ce terme dans la suite de la description.
On resterait parfaitement dans le cadre de l'invention en divisant le tube central en plus de deux circuits indépendants, par exemple 3 circuits indépendants, avec un mode d'alimentation adapté aux épingles formant un module, mais pour des raisons de clarté, la description qui suit est faite sur deux circuits indépendants.

Dans la suite du texte, nous effectuerons la description du cas particulier d'un moyen de division constitué d'un croisillon interne définissant 4 secteurs égaux s'étendant sur toute la hauteur du tube central et définissant deux circuits indépendants. De manière préférée, le nombre de circuits indépendants par tube central est alors de deux.
Le croisillon interne divise donc le volume intérieur du tube central en 4 secteurs identiques qui sont appariés selon (L1)/(V1) pour le premier circuit, et (L2)/(V2) pour le second circuit. Pour le premier circuit (L1)/(V1), la portion (L1) correspond à l'alimentation en fluide de refroidissement liquide, et la portion (V1) correspond au retour du fluide de refroidissement partiellement vaporisé.
Les portions (L1) et (V1) ne sont pas en communication au niveau du tube central. La portion (L1) est verticale descendante au sens du fluide de refroidissement liquide, et la portion (V1) est verticale ascendante au sens du fluide de refroidissement partiellement vaporisé.
De la même manière, pour le second circuit (L2)/(V2), la portion (L2) correspond à l'alimentation en fluide de refroidissement liquide, et la portion (V2) correspond au retour du fluide de refroidissement partiellement vaporisé. Pour simplifier, on parlera de circuit L1 pour désigner le premier circuit, et de circuit L2 pour désigner le second circuit.
La description sera mieux comprise en suivant la représentation schématique de la figure 8.
Selon ce mode particulier de réalisation de l'invention, le premier circuit L1 alimente les deux épingles 1 et 3 situées à l'étage N, et le second circuit L2 alimente les 2 autres épingles du même étage, soit les épingles 2 et 4. A l'étage suivant noté N+1, le circuit L1 alimente les deux épingles 2 et 4, et le second circuit L2 alimente les deux autres épingles 1 et 3.
On comprend donc que ce mode de liaison entre le tube central et les épingles du module entourant le tube central aux étages consécutifs N et N+1 permet de réaliser une alternance au sens où, si l'on considère les différentes épingles d'un groupe vertical de module, c'est à dire les différentes épingles verticalement alignées d'un étage au suivant, elles sont alternativement alimentées par le circuit L1 et par le circuit L2.
De même, au niveau de chaque module, une moitié des épingles est alimentée par le circuit L1, et l'autre moitié est alimentée par le circuit L2. On a choisi dans cet exemple d'alimenter par le même circuit deux épingles en diagonale, ce qui correspond à la configuration préférée.
On resterait néanmoins dans le cadre de l'invention en alimentant deux épingles adjacentes par exemple 1 et 2, par le circuit L1, les épingles 3 et 4 étant alors alimentées par le circuit L2. A l'étage suivant, le circuit L1 alimenterait les épingles 3 et 4, et le circuit L2 alimenterait les épingles 1 et 2.

De manière générale, le tube central permet par ses 2 circuits indépendants, une alimentation d'une moitié d'épingle par son premier circuit, et d'une autre moitié d'épingle par son autre circuit, les deux moitiés d'épingles pouvant être définies à volonté.
De manière préférée, le mode d'alimentation "alternée" permet de réaliser une alimentation alternée au sens où les 2 épingles alimentées par le circuit L1 à un étage N, se retrouveront alimentées par le même circuit L1 à l'étage N+2, et où les deux autres épingles alimentées par le circuit L2 à l'étage N se retrouveront alimentées par le même circuit L2 à l'étage N+2.
Le fait de disposer sur chaque tube central de deux circuits indépendants permet également, en cas de besoin, de fermer un circuit, ce qui a pour effet de supprimer la circulation sur la moitié des épingles d'un étage donné, et de conserver la circulation sur l'autre moitié des épingles.

Ceci étant réalisé de façon alternée d'un étage au suivant, a alors pour effet de maintenir une certaine homogénéité de la distribution des épingles en fonctionnement sur l'ensemble du volume du réacteur. L'isolation d'un circuit L1 ou L2 peut éventuellement être réalisée depuis l'extérieur du réacteur en manoeuvrant des vannes situées sur chacun de ces circuits. En cas de fuite d'une épingle, il est alors possible d'isoler le circuit L1 ou L2 qui alimente cette épingle, tout en continuant une marche normale de l'unité. Dans les circuits L1 et L2, entre chaque étage, un organe déprimogène peut être installé de façon à assurer un débit de fluide de refroidissement identique entre chaque module.

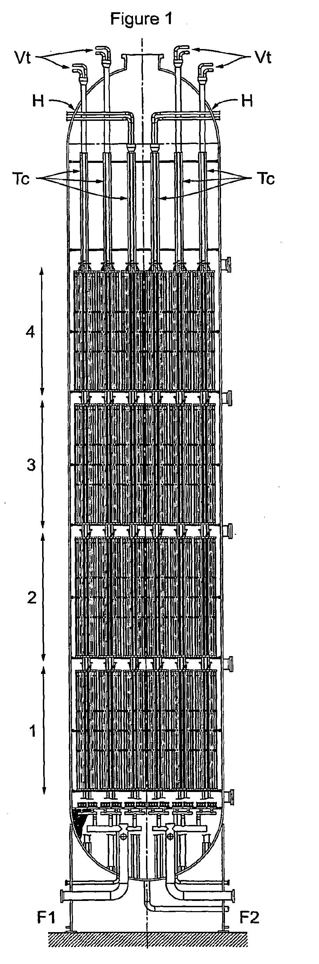

Pour généraliser la description précédente effectuée dans un cas particulier, nous utiliserons une notation à deux indices pour repérer chaque épingle Eij d'un module donné, le premier indice i désignant le numéro de l'épingle faisant partie d'un module donné ou position de l'épingle notée 1,2,3,4 dans le sens des aiguilles d'une montre (comme sur la figure 8), et le second indice j désignant le numéro de l'étage considéré, noté 1,2,3,4 du bas vers le haut du réacteur (cf. figure 1).

Dans le cas de l'équivalence des modules standards situés sur un étage donné, le repérage à deux indices est suffisant pour désigner toute épingle du faisceau. Par exemple, les épingles E11, E21, E31, E41 désignent les 4 épingles situées sur un module donné du premier étage en partant de l'épingle situé en position 1, et en suivant selon les aiguilles d'une montre.
Les épingles E11, E12, E13, E14 désignent les 4 épingles en position 1, verticalement alignées lorsqu'on passe successivement les étages 1, 2, 3 et 4.
On définit donc à partir du tableau 1 un plan d'alimentation en affectant à chaque épingle Eij son circuit d'alimentation L1 ou L2. Une épingle alimentée par le circuit L1 va générer un fluide au moins partiellement vaporisé qui est récupéré dans le circuit V1. Par simplification, nous parlons de circuit L1, mais le circuit complet comprend le circuit d'alimentation L1 et la collecte du fluide partiellement vaporisé au moyen du circuit V1. De même pour L2 et V2.

Ainsi dans le tableau 1 d'alimentation selon un mode préféré de réalisation de l'invention, on observe une alternance des circuits d'alimentation L1 et L2, au sens où deux épingles consécutives, soit dans le sens des aiguilles d'une montre à l'intérieur d'un module donné, soit dans le sens vertical d'un étage à l'autre, ne sont jamais alimentées par le même circuit.
C'est en ce sens qu'il faut comprendre précisément l'expression alimentation alternée. L'alimentation des épingles du faisceau d'échange de chaleur selon l'invention est, dans ce mode réalisation préféré, alternée entre deux épingles adjacentes, soit à l'intérieur d'un même module, soit entre deux étages consécutifs.

**Tableau 1: alimentation alternée**

| | | | |
|---|---|---|---|
| E11 (L1) | E21 (L2) | E31 (L1) | E41 (L2) |
| E21 (L2) | E22 (L1) | E23 (L2) | E24 (L1) |
| E31 (L1) | E32 (L2) | E33 (L1) | E34 (L2) |
| E41 (L2) | E42 (L1) | E43 (L2) | E44 (L1) |

La disposition verticale alignée des modules est particulièrement intéressante lorsqu'on doit extraire une épingle du réacteur car, en considérant une épingle située à un étage quelconque du réacteur, il suffira d'extraire la ou les épingles située(s) à la verticale de l'épingle considérée, sans toucher aux autres épingles du faisceau situées au même niveau ou à un niveau inférieur (extraction par le haut) ou supérieur (extraction par le bas).
De plus, si on désire condamner la circulation du fluide dans un module donné, il est possible de fermer un circuit L1 ou L2, et de laisser l'autre en fonctionnement, ce qui a pour effet de maintenir sur chaque module la moitié des épingles en fonctionnement, et de respecter ainsi une homogénéité de répartition des épingles en fonctionnement.
Pour le démontage d'une épingle située à l'étage inférieur (étage noté 1) du réacteur, un exemple des différentes opérations à réaliser est décrit ci-après.
Une grue, un treuil ou tout autre équipement de levage est installé au dessus du réacteur.
La distance qui sépare l'équipement de levage de la tête du réacteur est supérieure à la longueur d'une épingle. Un trou d'homme dont l'ouverture a une dimension supérieure à la largeur d'une épingle équipe le dôme de tête ou la partie basse du réacteur.
Ainsi par exemple, dans le cas d'une extraction d'une épingle par le haut du réacteur, une poutre permanente équipe la partie supérieure du réacteur, la distance qui sépare cette poutre de la tête de l'épingle supérieure est supérieure à la longueur d'une épingle.
Des poutres temporaires sont installées dans le réacteur une fois celui-ci arrêté, inerté et ouvert à l'atmosphère, ces poutres formant une sorte de grille couvrant la section du réacteur et coopèrent avec la poutre permanente. Grâce à cette grille, un équipement temporaire de levage (type palan, treuil...) peut être installé dans le réacteur et se déplacer dans un plan horizontal au-dessus des modules. Pour démonter une épingle défectueuse située au fond du réacteur, par exemple l'épingle E11, il convient de démonter préalablement les épingles qui se trouvent au-dessus de celle-ci, soit E14, puis E13 et E12. Pour cela, l'homme du métier attachera l'épingle E14 au moyen de levage situé à l'intérieur en utilisant par exemple des élingues.

Dans une deuxième étape, les soudures reliant l'épingle E14 au tube central sont découpées. Les soudures des éléments support inférieurs et supérieurs sont elles aussi découpées. L'épingle E14 est retirée de son module d'origine au moyen de l'équipement de levage interne au réacteur. Une fois extraite de l'ensemble de l'échangeur, le treuil et l'épingle sont déplacés sur la grille formée par les poutres temporaires afin de venir positionner l'épingle sous le trou d'homme supérieur du réacteur. Dans cette position l'épingle E14 peut être extraite du réacteur à l'aide du système de levage externe. L'épingle E13 peut être ôtée du réacteur en suivant la même procédure. L'épingle E12 peut être ôtée du réacteur en suivant la même procédure. L'accès à l'épingle E11 étant libéré, il est alors possible d'ôter l'épingle E11 en suivant la même procédure que pour les épingles E14, E13, et E12.
Le processus peut, si nécessaire, être ensuite inversé afin éventuellement de remplacer l'épingle E11 initiale défectueuse par une épingle neuve, et surtout afin de repositionner les épingles E12 à E14 avant la remise eu fonctionnement du réacteur.
Ainsi l'invention concerne également un procédé d'extraction d'une épingle E11 d'un réacteur pour la synthèse Fischer-Tropsch comprenant un faisceau d'échange selon la présente description, comprenant les étapes suivantes:
a) On attache l'épingle E14, situé à la verticale de l'épingle E11 à l'étage 4, au moyen d'un moyen de levage situé à l'intérieur du réacteur en utilisant des élingues,
b) On découpe les soudures reliant l'épingle E14 au tube central du module correspondant, les soudures des éléments support inférieurs et supérieurs encadrant l'épingle E14 sont elles aussi découpées,
c) On retire l'épingle E14 de son module d'origine au moyen d'un équipement de levage interne au réacteur et on déplace ladite épingle sur la grille formée par les poutres temporaires afin de venir la positionner sous le trou d'homme supérieur du réacteur,
d) On extrait depuis cette position l'épingle E14 du réacteur à l'aide d'un système de levage externe,
e) On extrait l'épingle E13 du réacteur en suivant de la même manière les étapes a) à c),
f) On extrait l'épingle E12 du réacteur en suivant de la même manière les étapes a) à c).
g) On extrait l'épingle E11 du réacteur en suivant de la même manière les étapes 1 à 3.

### EXEMPLE SELON L'INVENTION

L'exemple ci dessous concerne un réacteur industriel de synthèse Fischer Tropsch, traitant une débit d'alimentation de 430 000 Nm³/heure et devant évacuer 242 MW/h (mégaWatts par heure).
Un module possède 4 épingles, chaque épingle consiste en un conduit vertical effectuant 24 allers et retours verticaux, chaque aller et retour étant séparé par une portion du conduit en U. Chaque aller (ou retour) a une longueur de 6,9 mètres.

Chaque conduit vertical est constitué d'un tube de diamètre intérieur 52,5 mm, et d'épaisseur 3,9 mm (1 mm = 10⁻³ m)
Il y a donc 24 allers et retours (ou passes) par épingle.
L'encombrement total d'un module est en hauteur de 7,2 mètres, et en largeur de 1,4 mètre.
Le tube central d'un module a un diamètre extérieur de 324 mm. Il y a 24 modules identiques par étage, et 4 étages régulièrement répartis sur la hauteur du réacteur avec un espace entre étage de 1,2 mètre.
A ces 24 modules standards, s'ajoutent 8 modules non standards comportant chacun 3 épingles, et placés en paroi du réacteur de façon à occuper au mieux l'espace correspondant.
Il y a 32 épingles attenants à la paroi du réacteur dont 8 font partie de modules non standards, les 24 autres appartenant à des modules standards. Le débit total d'eau de refroidissement dans les tubes est de 3000 à 4000 tonnes/heure. Le plan d'alimentation des épingles est un plan alterné conformément au tableau 1 de la description détaillée.
Cette configuration de l'échangeur permet d'évacuer la chaleur dégagée et donc de contrôler l'exothermicité de la réaction.

## Revendications

1. Faisceau d'échange de chaleur contenu à l'intérieur d'un réacteur de synthèse Fischer-Tropsch constitué d'une enveloppe et équipé de moyens d'introduction des fluides réactionnels, de moyens d'introduction d'un fluide de refroidissement et de moyens d'évacuation dudit fluide de refroidissement partiellement vaporisé, ledit faisceau comportant au moins deux étages de modules identiques, chaque module comprenant un ensemble d'épingles identiques réparties autour du tube central commun au module considéré et à l'ensemble des modules verticalement alignés avec le module considéré sur les différents étages du faisceau, dans lequel ledit tube central comprend des séparations permettant à la fois l'alimentation en fluide de refroidissement des épingles du module et la collecte du fluide partiellement vaporisé de ces mêmes épingles.

2. Faisceau d'échange de chaleur selon la revendication 1 dans lequel l'alimentation des épingles dudit faisceau est alternée entre deux épingles adjacentes, soit à l'intérieur d'un même module, soit entre deux étages consécutifs.

3. Faisceau d'échange de chaleur selon l'une des revendications 1 ou 2 dans lequel la surface d'échange par unité de volume de milieu réactionnel est comprise entre 4 et 30 m²/m³, préférentiellement comprise entre 4 et 20 m²/m³, et de manière encore préférée comprise entre 4 et 15 m²/m³.

4. Faisceau d'échange de chaleur selon l'une quelconque des revendications 1 à 3 dans lequel le nombre d'épingles par module est égal à 2, 4 ,6 ou 8.

5. Faisceau d'échange de chaleur selon l'une quelconque des revendications 1 à 4 dans lequel le nombre d'étages est compris entre 2 et 6.

6. Faisceau d'échange de chaleur selon l'une quelconque des revendications 1 à 5 dans lequel le nombre d'épingles par module est égal à 4.

7. Faisceau d'échange de chaleur selon l'une quelconque des revendications 1 à 6 dans lequel le nombre de modules par étage est compris entre 5 et 80.

8. Faisceau d'échange de chaleur selon l'une quelconque des revendications 1 à 7 dans lequel le tube central est divisé par un croisillon interne déterminant 4 secteurs verticaux égaux, permettant de définir deux circuits indépendants d'alimentation en liquide de refroidissement et de récupération du liquide de refroidissement partiellement vaporisé.

9. Faisceau d'échange de chaleur selon l'une quelconque des revendications 1 à 8 dans lequel les épingles de chaque module comportent un nombre de trajets verticaux, ou passes, compris entre 10 et 50.

10. Faisceau d'échange de chaleur selon l'une quelconque des revendication 1 à 9 dans lequel chaque tube central d'un module comporte des feuilles primaires soudées le long de la paroi externe dudit tube central et s'étendant tout au long de ladite paroi, de manière à augmenter l'inertie.

11. Faisceau d'échange de chaleur selon la revendication 10 dans lequel chaque tube central est muni en plus des feuilles primaires, de feuilles secondaires soudées aux feuilles primaires de manière à réaliser en combinaison avec ces dernières une forme en T.

12. Procédé d'extraction d'une épingle E11 d'un faisceau d'échange selon l'une des revendications 1 à 11 comprenant les étapes suivantes:
a) On attache l'épingle E14, située à la verticale de l'épingle E11 à l'étage 4, au moyen d'un moyen de levage situé à l'intérieur du réacteur en utilisant des élingues,
b) On découpe les soudures reliant l'épingle E14 au tube central du module correspondant, les soudures des éléments support inférieurs et supérieurs encadrant l'épingle E14 sont elles aussi découpées,
c) On retire l'épingle E14 de son module d'origine au moyen d'un équipement de levage interne au réacteur, et on déplace ladite épingle sur la grille formée par les poutres temporaires afin de venir la positionner sous le trou d'homme supérieur du réacteur,
d) On extrait depuis cette position l'épingle E14 du réacteur à l'aide d'un système de levage externe,
e) On extrait l'épingle E13 du réacteur en suivant de la même manière les étapes a) à c),
f) On extrait l'épingle E12 du réacteur en suivant de la même manière les étapes a) à c).
g) On extrait l'épingle E11 du réacteur en suivant de la même manière les étapes a) à c).

## Claims

1. Heat exchange bundle contained in the inside of a reactor for Fischer-Tropsch synthesis comprising a casing and fitted with means of introducing reaction fluids, means of introducing a coolant and means of evacuating said partially vaporized coolant, said bundle comprising at least two stages of identical modules, each module comprising a set of identical hairpins distributed around the central tube common to the module in question and to the set of modules vertically aligned with the module in question at the different stages of the bundle, in which said central tube comprises separations permitting at the same time the supply of coolant to the hairpins of the module and the recovery of the coolant, partially vaporized from these same hairpins.

2. Heat exchange bundle according to claim 1 in which the supply of the hairpins of said bundle is alternated between two adjacent hairpins, either inside the same module or between two consecutive stages.

3. Heat exchange bundle according to one of claims 1 or 2 in which the exchange surface per unit of volume of reaction medium is comprised between 4 and 30 m²/m³, preferably between 4 and 20 m²/m³, and even more preferably between 4 and 15 m²/m³.

4. Heat exchange bundle according to any one of claims 1 to 3 in which the number of hairpins per module is equal to 2, 4, 6 or 8.

5. Heat exchange bundle according to any one of claims 1 to 4 in which the number of stages is comprised between 2 and 6.

6. Heat exchange bundle according to any one of claims 1 to 5 in which the number of hairpins per module is equal to 4.

7. Heat exchange bundle according to any one of claims 1 to 6 in which the number of modules per stage is comprised between 5 and 80,

8. Heat exchange bundle according to any one of claims 1 to 7 in which the central tube is divided by an internal stay defining 4 equal vertical sectors, allowing two independent circuits to be defined for coolant supply and recovery of coolant, partially vaporized.

9. Heat exchange bundle according to any one of claims 1 to 8 in which the hairpins of each module comprise a number of vertical paths, or passes, comprised between 10 and 50.

10. Heat exchange bundle according to any of claims 1 to 9 in which each central tube of a module comprises primary leaves welded along the external wall of said central tube and extending along the whole of said wall, in order to increase inertia.

11. Heat exchange bundle according to claim 10 in which each central tube is fitted, in addition to the primary leaves, with secondary leaves welded to the primary leaves, so as to make a T-shape in combination with the latter.

12. Method for removal of a hairpin E11 from an exchange bundle according to one of claims 1 to 11, comprising the following steps:
a) The hairpin E14, situated vertically to the hairpin E11 at stage 4 is attached by a lifting means situated inside the reactor, using slings.
b) The welds connecting the hairpin E14 to the central tube of the corresponding module are cut, the welds of the upper and lower support elements flanking the hairpin E14 are also cut.
c) The hairpin E14 is removed from its original module by means of a lifting device inside the reactor and said hairpin is moved over the grid formed by the temporary beams in order to position it under the upper manhole of the reactor.
d) The hairpin E14 is removed from this position out of the reactor using an external lifting system.
e) The hairpin E13 is removed from the reactor in the same way as in steps a) to c).
f) The hairpin E12 is removed from the reactor in the same way as in steps a) to c).
g) The hairpin E11 is removed from the reactor in the same way as in steps a) to c).

## Patentansprüche

1. Wärmetauscherbündel, das im Innern eines Reaktors zur Fischer-Tropsch-Synthese enthalten ist, das aus einem Gehäuse besteht und mit Mitteln zum Einführen der Reaktionsfluide, mit Mitteln zum Einführen eines Kühlfluids und mit Mitteln zum Ableiten des teilweise verdampften Kühlfluids ausgestattet ist, wobei das Bündel mindestens zwei Stufen aus identischen Modulen umfasst, wobei jedes Modul eine Gruppe identischer Haarnadelrohre umfasst, die um das Zentralrohr verteilt sind, das dem betrachteten Modul und der Gesamtheit der Module gemeinsam ist, die senkrecht mit dem betrachteten Modul angeordnet sind, auf den verschiedenen Stufen der Kette, wobei das Zentralrohr Abtrennungen umfasst, die gleichzeitig die Versorgung der Haarnadelrohre des Moduls mit Kühlfluid und das Sammeln des teilweise verdampften Fluids aus eben diesen Haarnadelrohren ermöglichen.

2. Wärmetauscherbündel nach Anspruch 1, wobei die Versorgung der Haarnadelrohre des Bündels zwischen zwei benachbarten Haarnadelrohren alterniert, entweder im Innern eines gleichen Moduls oder zwischen zwei aufeinander folgenden Stufen.

3. Wärmetauscherbündel nach einem der Ansprüche 1 oder 2, wobei die Austauschfläche je Volumeneinheit des Reaktionsmediums im Bereich zwischen 4 und 30 m²/m³, vorzugsweise im Bereich zwischen 4 und 20 m²/m³ und noch stärker bevorzugt im Bereich zwischen 4 und 15 m²/m³ liegt.

4. Wärmetauscherbündel nach irgendeinem der Ansprüche 1 bis 3, wobei die Anzahl der Haarnadelrohre je Modul gleich 2, 4 ,6 oder 8 ist.

5. Wärmetauscherbündel nach irgendeinem der Ansprüche 1 bis 4, wobei die Anzahl der Stufen im Bereich zwischen 2 und 6 liegt.

6. Wärmetauscherbündel nach irgendeinem der Ansprüche 1 bis 5, wobei die Anzahl der Haarnadelrohre je Modul gleich 4 ist.

7. Wärmetauscherbündel nach irgendeinem der Ansprüche 1 bis 6, wobei die Anzahl der Module je Stufe im Bereich zwischen 5 und 80 liegt.

8. Wärmetauscherbündel nach irgendeinem der Ansprüche 1 bis 7, wobei das Zentralrohr durch ein inneres Kreuzstück geteilt ist, das 4 gleiche senkrechte Abschnitte begrenzt, das es ermöglicht, zwei unabhängige Kreisläufe zur Versorgung mit Kühlflüssigkeit und zur Gewinnung der teilweise verdampften Kühlflüssigkeit zu definieren.

9. Wärmetauscherbündel nach irgendeinem der Ansprüche 1 bis 8, wobei die Haarnadelrohre jedes Moduls eine Anzahl senkrechter Kanäle oder Durchflüsse, im Bereich zwischen 10 und 50, umfassen.

10. Wärmetauscherbündel nach irgendeinem der Ansprüche 1 bis 9, wobei jedes Zentralrohr eines Moduls primäre Platten umfasst, die entlang der Außenwand des Zentralrohrs angeschweißt sind und sich über die gesamte Wand erstrecken, um die Trägheit zu erhöhen.

11. Wärmetauscherbündel nach Anspruch 10, wobei jedes Zentralrohr neben den primären Platten mit sekundären Platten ausgestattet ist, die an die primären Platten angeschweißt sind, um in Kombination mit den Letztgenannten eine T-Form zu ergeben.

12. Verfahren zum Entnehmen eines Haarnadelrohrs E11 eines Tauscherbündels nach einem der Ansprüche 1 bis 11, das die folgenden Schritte umfasst:
a) Befestigen des Haarnadelrohrs E14, das in der Vertikale des Haarnadelrohrs E11 in Stufe 4 liegt, mittels eines Hubmittels, das im Innern des Reaktors liegt, unter Verwendung von Anschlagmitteln,
b) Aufschneiden der Schweißnähte, die das Haarnadelrohr E14 mit dem Zentralrohr des entsprechenden Moduls verbinden, wobei die Schweißnähte der unteren und oberen Trägerelemente, die das Haarnadelrohr E14 einrahmen, ihrerseits auch aufgeschnitten werden,
c) Entfernen das Haarnadelrohrs E14 aus seinem ursprünglichen Modul mittels einer Hubeinrichtung im Innern des Reaktors und Verlagern des Haarnadelrohrs auf das Gitter, das aus den temporären Trägern gebildet ist, um es unter der oberen Einstiegsöffnung des Reaktors zu positionieren,
d) Dann Entnehmen des Haarnadelrohrs E14 aus dieser Position aus dem Reaktor mit Hilfe eines externen Hubsystems,
e) Entnehmen des Haarnadelrohrs E13 aus dem Reaktor, indem auf die gleiche Weise vorgegangen wird, wie in den Schritten a) bis c).
f) Entnehmen des Haarnadelrohrs E12 aus dem Reaktor, indem auf die gleiche Weise vorgegangen wird, wie in den Schritten a) bis c).
g) Entnehmen des Haarnadelrohrs E11 aus dem Reaktor, indem auf die gleiche Weise vorgegangen wird, wie in den Schritten a) bis c).
